# EUROPEAN PATENT APPLICATION

(11) **EP 4 539 160 A1**
(43) Date of publication of application: **16.04.2025**
(21) Application number: 24829015.7
(22) Date of filing: 26.01.2024
(51) Int. Cl.: H01M 4/38, H01M 4/62, H01M 10/0525

(54) **NEGATIVE ELECTRODE MATERIAL AND PREPARATION METHOD THEREFOR, AND LITHIUM-ION BATTERY**

(30) Priority: 30.06.2023 CN 202310798360
(71) Applicant: BTR New Material Group Co., Ltd., Shenzhen, Guangdong 518106 (CN)
(72) Inventor: LIU, Xingyang, Shenzhen, Guangdong 518106 (CN); QIAO, Weichuan, Shenzhen, Guangdong 518106 (CN); ZHOU, Haihui, Shenzhen, Guangdong 518106 (CN); REN, Jianguo, Shenzhen, Guangdong 518106 (CN); HE, Xueqin, Shenzhen, Guangdong 518106 (CN)
(74) Representative: Boult Wade Tennant LLP
(86) International application number: PCT/CN2024/074244
(87) International publication number: WO 2025/001125

(57) **Abstract**

The present application relates to a negative electrode material, a preparation method thereof and a lithium-ion battery. By observing an SEM image, the negative electrode material includes carbonaceous particles with pores, and at least some of the pores have a slenderness ratio greater than 3, the total number of randomly observed pores is 100, and the number of pores with an aperture of 0.1µm to 0.5µm takes a proportion greater than or equal to 60% of the total number of pores, and a maximum aperture of the pores is less than or equal to 3µm. The negative electrode material of the present application has elongated pores, and most of the pores have a relatively small aperture, which indicates that in the present application, the carbonaceous particles have a relatively small pore volume inside, and less large pores are provided, so that the carbonaceous particles have excellent compactness, and the capacity, expansion and cycle performances of the negative electrode material are improved.

## Description

The present application claims the priority of Chinese patent application No. 202310798360X titled "NEGATIVE ELECTRODE MATERIAL, PREPARATION METHOD THEREOF, AND LITHIUM-ION BATTERY" filed with the CNIPA on June 30, 2023, the entire contents of which are incorporated herein by reference.

### TECHNICAL FIELD

The present application relates to the technical field of negative electrode materials, and particularly relates to a negative electrode material, a preparation method thereof and a lithium-ion battery.

### BACKGROUND OF THE INVENTION

With the aggravation of global warming, controlling the emission of CO₂ has become an urgent challenge to the human society. Under the background of "carbon neutral" and "carbon peak" across China, the development of new energy automobiles is an irresistible trend, and various preferential policies and subsidies are successively introduced by governments of various countries to promote the development of new energy automobiles. Under the promotion of policies, electric automobiles with lithium-ion batteries as power batteries are experiencing rapid development. The negative electrode material is an important component of the lithium-ion battery, and directly determines the performance and price of the power battery.

At present, graphite is still a dominating material of the negative electrode material, and depending on different sources, graphite may be classified into artificial graphite and natural graphite. The artificial graphite occupies most of the power battery market due to its excellent cycle stability. However, the manufacturing process of the artificial graphite requires an expensive graphitization process, and the price of the raw materials continuously rises, which makes the price of the artificial graphite impossible to be reduced, and it may even be further raised. To further reduce the cost of the negative electrode material, people have turned their attention to natural graphite, the greatest advantage of which is a preparation process without graphitization and low cost. However, natural graphite in the power battery has poor cycle stability and expansion performance.

Therefore, how to improve the expansion performance and cycle stability of natural graphite has become an important research topic in the field of negative electrode materials now. A natural graphite negative electrode material is typically prepared from natural flake graphite through spheroidization and modification processes. In the production process of the natural graphite negative electrode material, the spheroidization process will inevitably cause pores inside particles, and the pores inside the spherical natural graphite particles are usually large, mostly in micron order, resulting in high expansion and poor cycle stability of the natural graphite negative electrode material. Generally, the expansion and cycle performances of the material are improved by reducing sizes of the internal pores. However, in the actual production process, it is difficult to reduce sizes of the pores inside the graphite particles through the spheroidization process, and instead, sizes of the pores inside the graphite particles are reduced in a back end process of spheroidization. Moreover, since some pores in the spherical natural graphite granule are closed, it is difficult to control compactness of the pores inside the particles by a conventional filling process, and a phase different from a crystalline structure of the original natural flake graphite material is introduced into the filled granule particles, resulting in increased grain boundaries and reduced dynamic performance, and making it impossible to improve the electrochemical performance of the natural graphite negative electrode material as a whole.

### SUMMARY OF THE INVENTION

The present application provides a negative electrode material, a preparation method thereof and a lithium-ion battery which can improve the capacity, expansion and cycle performances of the negative electrode material.

In a first aspect, an embodiment of the present application provides a negative electrode material, and by observing an SEM image, the negative electrode material includes carbonaceous particles with pores, at least some of the pores have a slenderness ratio greater than 3, the total number of randomly observed pores is 100, and the number of pores with an aperture of 0.1µm to 0.5µm takes a proportion greater than or equal to 60% of the total number of pores.

In some implementations, a maximum aperture of the pores is less than or equal to 3µm.

In some implementations, the carbonaceous particles include natural graphite.

In some implementations, the natural graphite includes at least one of flake graphite or microcrystalline graphite.

In some implementations, a median particle size of the carbonaceous particles is 5µm to 25µm.

In some implementations, the negative electrode material further includes a cladding layer covering at least partially a surface of the carbonaceous particles.

In some implementations, the cladding layer is made of a carbon material.

In some implementations, the carbon material includes at least one of soft carbon, crystalline carbon, amorphous carbon or hard carbon.

In some implementations, a median particle size D50 of the negative electrode material satisfies: 5µm<D50<25µm.

In some implementations, the negative electrode material has a sphericity Sh(10%)≥0.75.

In some implementations, the negative electrode material has a sphericity Sh(50%)≥0.83.

In some implementations, the negative electrode material has a sphericity Sh(90%)≥0.88.

In some implementations, the negative electrode material has a pore volume of 0.05 mL/g to 0.11 mL/g.

In some implementations, the negative electrode material has a specific surface area of 0.5 m²/g to 3.5 m²/g.

In a second aspect, an embodiment of the present application provides a preparation method for a negative electrode material, including:
providing a natural graphite precursor, where the natural graphite precursor has a median particle size of 5µm to 25µm, a sphericity Sh(10%)≥0.75, a sphericity Sh(50%)≥0.83, and a sphericity Sh(90%)≥0.88; and
compacting the natural graphite precursor so that the resulting negative electrode material includes carbonaceous particles with pores, at least some of the pores have a slenderness ratio greater than 3, the total number of randomly observed pores is 100, and the number of pores with an aperture of 0.1µm to 0.5µm takes a proportion greater than or equal to 60% of the total number of pores.

In some implementations, the natural graphite precursor is prepared by: shaping natural graphite.

In some implementations, the natural graphite includes at least one of flake graphite or microcrystalline graphite.

In some implementations, the compacting includes at least one of cold isostatic pressing, hot isostatic pressing, mold pressing or hot press molding.

In some implementations, the compacting is performed at a pressure of 20MPa to 200MPa.

In some implementations, the compacting is performed for 1min to 200min.

In some implementations, the compacting is performed at a temperature of 25°C to 1500 °C.

In some implementations, before compacting the natural graphite precursor, the method further includes: a step of mixing a cladding material with the natural graphite precursor, and then compacting the mixture, where the cladding material includes at least one of a high-molecular polymer, resin, coal pitch, petroleum pitch, mesophase pitch, coal tar or heavy oil.

In some implementations, after obtaining the negative electrode material, the method further includes: a step of performing thermal treatment on the negative electrode material mixed with the cladding material.

In some implementations, the cladding material includes at least one of a high-molecular polymer, resin, coal pitch, petroleum pitch, mesophase pitch, coal tar or heavy oil.

In some implementations, a mass ratio of the negative electrode material to the cladding material is 100:(2 to 100).

In some implementations, the thermal treatment is performed at a temperature of 800°C to 3000°C.

In some implementations, the thermal treatment is performed in a protective gas atmosphere, where the protective gas includes at least one of helium, neon, argon, nitrogen or krypton.

In some implementations, the thermal treatment is performed for 1h to 24h.

In a third aspect, an embodiment of the present application provides a lithium-ion battery, including the negative electrode material according to the first aspect, or a negative electrode material prepared by the preparation method according to the second aspect.

The technical solutions of the present application have at least the following beneficial effects: the negative electrode material of the present application includes carbonaceous particles with pores, and at least some of the pores have a slenderness ratio greater than 3, which indicates that in the present application, the pores in the carbonaceous particles are elongated, and that the materials inside the carbonaceous particles are orderly arranged and flake graphite layers inside the particles are in close contact, thereby helping to improve the capacity performance of the negative electrode material. The present application further defines that the number of pores with an aperture of 0.1µm to 0.5µm takes a proportion greater than or equal to 60% of the total number of pores, which indicates that in the present application, the porous carbonaceous particles have fine pores as well as a low porosity, and therefore, the carbonaceous particles have a compacted structure, so that the negative electrode material generates lower expansion in the charging and discharging process. The negative electrode material of the present application has elongated pores, and most of the pores have a relatively small aperture, which indicates that in the present application, the carbonaceous particles have a relatively small pore volume inside, and less large pores are provided, so that the carbonaceous particles have excellent compactness, and the capacity, expansion and cycle performances of the negative electrode material are improved.

### BRIEF DESCRIPTION OF THE DRAWINGS

The present application is further described below with reference to the accompanying drawings and embodiments.
FIG. 1 is a flowchart of preparing a negative electrode material according to the present application;
FIG. 2 is an SEM image of a negative electrode material prepared in embodiment 1 of the present application;
FIG. 3 is an SEM image of a negative electrode material prepared in embodiment 2 of the present application;
FIG. 4 is an SEM image of a negative electrode material prepared in embodiment 3 of the present application;
FIG. 5 is an SEM image of a negative electrode material prepared in embodiment 4 of the present application;
FIG. 6 is an SEM image of a negative electrode material prepared in comparative example 1 of the present application;
FIG. 7 is an SEM image of a negative electrode material prepared in comparative example 2 of the present application; and
FIG. 8 is an SEM image of a negative electrode material prepared in comparative example 3 of the present application.

### DETAIL DESCRIPTION OF THE INVENTION

To better understand the technical solutions provided in the specification, the embodiments of the present application will be described in detail below with reference to the accompanying drawings.

It should be understood that the exemplary embodiments described are merely some, but not all, of the embodiments of the specification. Based on the embodiments in the specification, all other embodiments obtained by those ordinary skilled in the art without any creative effort fall into the protection scope of the specification.

The terminology used in the embodiments of the present application is for the purpose of describing particular embodiments only, and is not intended to limit the specification. As used in the embodiments of the present application and the appended claims, the singular forms "a", "an", and "the" are intended to include the plural forms as well, unless the context clearly indicates otherwise.

It should be understood that the term "and/or" as used herein is merely to describe an association relationship of associated objects, which may include three relationships; for example, ΔJ and/or B may refer to: ΔJ alone, ΔJ and B, or B alone. In addition, the character "/" herein generally indicates that the former and latter associated objects are in an "or" relationship.

In the field of negative electrode materials, natural graphite mainly refers to spherical natural graphite obtained by processing flake graphite, and a main reason for the poor cycle performance of such materials is that: during lithium intercalation of the spherical natural graphite, co-intercalation with organic molecules in the electrolyte may occur, causing damage to the structure of the graphite material, and therefore, compared with artificial graphite, the natural graphite negative electrode material has a shorter cycle life and a higher expansion rate in the cycle process. Currently, a surface cladding method is usually adopted, in which an amorphous carbon layer is coated on the surface of natural graphite to isolate the electrolyte from the natural graphite, thereby improving the performance of the natural graphite.

At present, the surface of the natural graphite is mainly coated by a solid phase cladding method in which: the natural graphite is firstly mixed with a cladding modifier by physical mixing, and then in a carbonization process, the cladding modifier is subjected to a liquefaction process and flows to implement cladding automatically. This method is simple to operate, low in cost and widely applicable to modification of natural graphite negative electrode materials. However, small molecular substances in the modifier are continuously volatilized in the process, so that the liquefaction process is relatively short and the time is hard to control, and the liquid cladding agent cannot completely cover an outer surface of the natural graphite, especially a surface of the flake graphite inside the spherical graphite. As a result, the electrolyte gradually permeates into the uncoated surface of the natural graphite in the cycle process, so that an SEI film is continuously generated and the electrolyte is continuously intercalated into the natural graphite layer structure, which will consume a large amount of active lithium and damage the natural graphite structure, and cause a continuously reduced capacity.

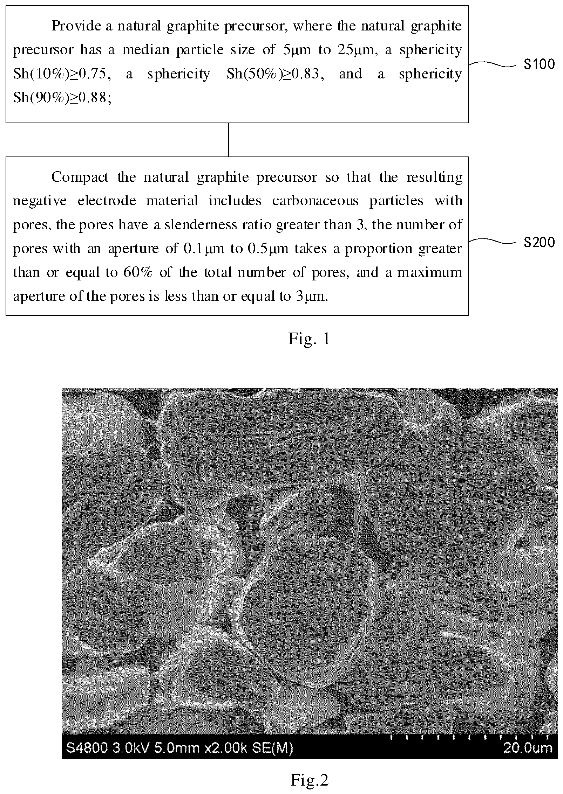

In view of this, the present application provides a negative electrode material. Referring to FIGs. 1 to 4, by observing a sectional SEM image of the negative electrode material, the negative electrode material includes carbonaceous particles with pores, the pores in the negative electrode material have a slenderness ratio greater than 3, the total number of randomly observed pores is 100, and the number of pores with an aperture of 0.1µm to 0.5µm takes a proportion greater than or equal to 60% of the total number of pores.

In the above solution, the negative electrode material of the present application includes carbonaceous particles with pores, and the pores have a slenderness ratio greater than 3, which indicates that in the present application, the pores in the carbonaceous particles are elongated, and that the materials inside the carbonaceous particles are orderly arranged and flake graphite layers inside the particles are in close contact, thereby helping to improve the capacity performance of the negative electrode material. The present application further defines that the number of pores with an aperture of 0.1µm to 0.5µm takes a proportion greater than or equal to 60% of the total number of pores, which indicates that in the present application, the porous carbonaceous particles have fine pores as well as a low porosity, and therefore, the carbonaceous particles have a compacted structure, so that the negative electrode material generates lower expansion in the charging and discharging process. The negative electrode material of the present application has elongated pores, and most of the pores have a relatively small aperture, which indicates that in the present application, the carbonaceous particles have a relatively small pore volume inside, and less large pores are provided, so that the carbonaceous particles have better compactness, and the capacity, expansion and cycle performances of the negative electrode material are improved.

In the present application, the aperture and length of the pores are both obtained by measurement on an electron scanning electron microscope image. In the present application, the elongated pores in the carbonaceous particles means that the pores exhibit regular linearity and have a slenderness ratio greater than 3.

In some implementations, the number of pores with an aperture of 0.1µm to 0.5µm takes a proportion greater than or equal to 60% of the total number of pores, where the specific proportion may be 60%, 65%, 70%, 75%, 80%, 85%, or 90%, or the like, or may be any other value within the above range, which is not limited herein. In the range defined above, the carbonaceous particles of the present application have smaller pores, and most of the pores have a diameter within a range of 0.1µm to 0.5µm, which indicates that the carbonaceous particles have a compacted structure and a relatively low porosity, so that the negative electrode material generates lower expansion in the charging and discharging process, and the expansion and cycle performances of the negative electrode material can be improved. If the number of pores with an aperture of 0.1µm to 0.5µm takes a proportion less than 60% of the total number of pores, it indicates that the carbonaceous particles have more large pores, resulting in deteriorated expansion performance of the negative electrode material.

In some implementations, a maximum aperture of the pores is less than or equal to 3µm, which may be specifically 0.5µm, 1µm, 1.5µm, 2µm, 2.5µm, or 3µm, or the like, or may be any other value within the above range, which is not limited herein. If the maximum diameter of the pores is greater than 3µm, it indicates that the materials inside the carbonaceous particles are in loose contact with poor compactness, resulting in deteriorated expansion and cycle performances of the negative electrode material.

In some implementations, a median particle size of the carbonaceous particles is 5µm to 25µm, which may be specifically 5µm, 8µm, 10µm, 13µm, 15µm, 18µm, 20µm, 23µm, or 25µm, or may be any other value within the above range, which is not limited herein.

In some implementations, the carbonaceous particles include natural graphite, which is less costly and has an excellent specific capacity compared with artificial graphite.

In some implementations, the natural graphite includes at least one of flake graphite or microcrystalline graphite.

In some implementations, the negative electrode material further includes a cladding layer covering at least partially a surface of the carbonaceous particles. With the cladding layer over the surface of the carbonaceous particles, deterioration of the first efficiency and the capacity caused by side reaction due to the electrolyte entering the negative electrode material can be alleviated on one hand, and, on the other hand, volume expansion of the carbonaceous particles can be relieved, thereby reducing volume expansion of the entire negative electrode material and swelling of electrode plates.

In some implementations, the cladding layer is made of a carbon material.

In some implementations, the carbon material includes at least one of soft carbon, crystalline carbon, amorphous carbon or hard carbon.

In some implementations, a median particle size D50 of the negative electrode material satisfies: 5µm<D50<25µm. Specifically, the median particle size D50 of the negative electrode material may be 6µm, 8µm, 10µm, 13µm, 15µm, 18µm, 20µm, 22µm, or 24µm, or the like, or may be any other value within the above range, which is not limited herein.

In some implementations, the negative electrode material has a sphericity Sh(10%)≥0.75, which may be specifically 0.75, 0.78, 0.80, 0.83, 0.85, 0.88, 0.90, or 0.95, or the like, or may be any other value within the above range, which is not limited herein. The sphericity Sh(10%) is a sphericity corresponding to a particle size distribution reaching 10%. The physical meaning is that particles with a sphericity smaller (or greater) than that sphericity take a proportion of 10%.

In some implementations, the negative electrode material has a sphericity Sh(50%)≥0.83, which may be specifically 0.83, 0.85, 0.88, 0.90, or 0.95, or the like, or may be any other value within the above range, which is not limited herein. The sphericity Sh(10%) is a sphericity corresponding to a particle size distribution reaching 50%. The physical meaning is that particles with a sphericity smaller (or greater) than that sphericity take a proportion of 50%.

In some implementations, the negative electrode material has a sphericity Sh(90%)≥0.88, which may be specifically 0.88, 0.90, or 0.95, or the like, or may be any other value within the above range, which is not limited herein. The sphericity Sh(90%) is a sphericity corresponding to a particle size distribution reaching 90%. The physical meaning is that particles with a sphericity smaller (or greater) than that sphericity take a proportion of 90%.

The negative electrode material of the present application has higher sphericity and narrower sphericity distribution, materials inside the natural graphite particle negative electrode material is orderly arranged, and flake graphite layers inside the particles are in close contact, so that the negative electrode material of the present application has a smaller specific surface area and a greater tap density, which can help to inhibit expansion of the negative electrode material and improve the expansion performance and cycle stability of the negative electrode material.

In some implementations, the negative electrode material has a pore volume of 0.05 mL/g to 0.11 mL/g, which may be specifically 0.05 mL/g, 0.06 mL/g, 0.07 mL/g, 0.08 mL/g, 0.09 mL/g, 0.10 mL/g, or 0.11 mL/g, or the like, or may be any other value within the above range, which is not limited herein. The negative electrode material of the present application has a relatively small pore volume, indicating relative close contact inside the negative electrode material, thereby helping to improve the expansion performance of the negative electrode material.

In some implementations, the negative electrode material has a specific surface area of 0.5 m²/g~3.5 m²/g, which may be specifically 0.5 m²/g, 0.7 m²/g, 1.0 m²/g, 1.3 m²/g, 1.5 m²/g, 1.8 m²/g, 2.3 m²/g, 2.8 m²/g, 3.0 m²/g or 3.5 m²/g or the like, or may be any other value within the above range, which is not limited herein.

The present application further provides a preparation method for the negative electrode material as described above. As shown in FIG. 1, which is a flowchart of preparing a negative electrode material according to the present application, the method includes:
providing a natural graphite precursor, where the natural graphite precursor has: a median particle size of 5µm to 25µm, a sphericity Sh(10%)≥0.75, a sphericity Sh(50%)≥0.83, and a sphericity Sh(90%)≥0.88; and
compacting the natural graphite precursor so that the resulting negative electrode material includes carbonaceous particles with pores, at least some of the pores have a slenderness ratio greater than 3, and the number of pores with an aperture of 0.1µm to 0.5µm takes a proportion greater than or equal to 60% of the total number of pores.

In the above solution, the present application adopts a natural graphite precursor of specific particle size and topography, which is then compacted to enable the negative electrode material of the present application to have elongated pores, most of which have a smaller aperture, so that the carbonaceous particles prepared in the present application are more compact. Further, since the natural graphite precursor of the present application has higher sphericity, the compacting process has little effect on the topography of the material (that is, there is almost no difference in sphericity before and after the compacting), the negative electrode material prepared in the present application has higher sphericity as well as elongated pores of a smaller aperture inside. Therefore, the capacity, expansion and cycle performances of the negative electrode material can be improved. The preparation technology involved in the present application is simple, and by means of the natural graphite raw material with higher sphericity, and collaborated with specific technological conditions, the present application can reduce the internal pores to a specified level while not filling, or filling only a few of, the pores in the natural graphite particles, thereby solving the problems of high expansion and poor cycle performance of the natural graphite negative electrode material in the existing art.

If the sphericity of the natural graphite precursor is below the range defined in the present application, the pores inside the natural graphite precursor particles will be compressed in the subsequent compacting process, leading to reduced sphericity and deteriorated topography. As a result, it is impossible to obtain a negative electrode material of excellent expansion and cycle performances even though the pores inside the material are relatively small and the flake graphite layers inside the particles are in close contact.

The preparation method of the present application is specifically described below with reference to embodiments:

At step S100, a natural graphite precursor is provided.

Specifically, the natural graphite precursor is prepared by: shaping natural graphite to obtain a natural graphite precursor.

In some implementations, the natural graphite includes at least one of flake graphite or microcrystalline graphite.

In some implementations, a device for the shaping includes at least one of a mechanical pulverizer, a jet mill, or a crusher.

In some implementations, the natural graphite precursor has a particle size of 5µm to 25µm, which may be specifically 5µm, 8µm, 10µm, 13µm, 15µm, 18µm, 20µm, 23µm, or 25µm, or may be any other value within the above range, which is not limited herein.

In some implementations, the natural graphite precursor has a sphericity Sh(10%)≥0.75, which may be specifically 0.75, 0.78, 0.80, 0.83, 0.85, 0.88, 0.90, or 0.95, or the like, or may be any other value within the above range, which is not limited herein.

In some implementations, the natural graphite precursor has a sphericity Sh(50%)≥0.83, which may be specifically 0.83, 0.85, 0.88, 0.90, or 0.95, or the like, or may be any other value within the above range, which is not limited herein.

In some implementations, the natural graphite precursor has a sphericity Sh(90%)≥0.88, which may be specifically 0.88, 0.90, or 0.95, or the like, or may be any other value within the above range, which is not limited herein.

The natural graphite precursor of the present application has higher sphericity, which can help to inhibit expansion of the negative electrode material and improve the expansion performance of the negative electrode material.

At step S200, the natural graphite precursor is compacted so that the resulting negative electrode material includes carbonaceous particles with pores, at least some of the pores have a slenderness ratio greater than 3, the total number of randomly observed pores is 100, the number of pores with an aperture of 0.1µm to 0.5µm takes a proportion greater than or equal to 60% of the total number of pores, and a maximum aperture of the pores is less than or equal to 3µm.

In the present application, the graphite within a specific sphericity range is compacted so that the natural graphite precursor is converted into carbonaceous particles in which flake graphite layers inside the particles are in close contact, the particles have elongated pores and most of the pores have a relatively small aperture, which indicates that in the present application, the carbonaceous particles have a relatively small pore volume inside, and less large pores are provided, so that the carbonaceous particles have excellent compactness, and the capacity, expansion and cycle performances of the negative electrode material are improved.

In some implementations, the compacting includes at least one of cold isostatic pressing, warm isostatic pressing, hot isostatic pressing, mold pressing or hot press molding.

In some implementations, the compacting is performed by cold isostatic pressing at a pressure of 60MPa to 200MPa, which may be specifically 60MPa, 80MPa, 100MPa, 120MPa, 150MPa, 180MPa, or 200MPa, or the like, or may be any other value within the above range, which is not limited herein.

In some implementations, the compacting is performed without cold isostatic pressing at a pressure of 20MPa to 200MPa, which may be specifically 20MPa, 60MPa, 80MPa, 100MPa, 120MPa, 150MPa, 180MPa, or 200MPa, or the like, or may be any other value within the above range, which is not limited herein. In other words, the compacting through hot isostatic pressing, mold pressing or hot press molding is performed at a pressure of 20MPa to 200MPa.

In some implementations, the compacting is performed for 1min to 200min, which may be specifically 1min, 10min, 50min, 100min, 150min, or 200min, or the like, or may be any other value within the above range, which is not limited herein.

In some implementations, the compacting is performed at a temperature of 25°C to 1500 °C, which may be specifically 25°C, 50°C, 100°C, 300°C, 500°C, 800°C, 1000°C, 1200°C, or 1500 °C, or the like, or may be any other value within the above range, which is not limited herein.

By adopting the compacting process, internal pores of a proper natural graphite precursor can be extruded and reduced under a pressure, so that a negative electrode material, in which the slenderness ratio is greater than 3, the number of pores with an aperture of 0.1µm to 0.5µm takes a proportion greater than or equal to 60% of the total number of pores, and a maximum aperture of the pores is less than or equal to 3µm, can be obtained.

In some implementations, after the compacting, the method further includes a step of crushing the resulting material.

In some implementations, the compacted material has a median particle size of 5µm to 25µm after crushing. It is to be understood that the compacting only has a great influence on the pores inside the natural graphite precursor, but has little influence on the particle size of the material, and therefore, the crushed material also has a median particle size controlled within 5µm to 25µm.

In some implementations, before compacting the natural graphite precursor, the method further includes: a step of mixing a cladding material with the natural graphite precursor, and then compacting the mixture. In other words, before the compacting, the cladding material is coated on at least part of the surface of the natural graphite precursor, and then the compacting is performed; or, the cladding layer is formed on the surface of the natural graphite precursor while the natural graphite precursor is compacted; or, the natural graphite precursor is firstly compacted, and then the cladding layer is formed on the surface of the natural graphite precursor. The sequence of the above steps may be adjusted according to the actual situation, and is not specifically limited herein.

In some implementations, the cladding material includes a carbon material, and preferably, the carbon material includes a carbon material having a softening point of 20°C to 300 °C.

In some implementations, the cladding material includes at least one of a high-molecular polymer, resin, coal pitch, petroleum pitch, mesophase pitch, coal tar or heavy oil.

In some implementations, a mass ratio of the natural graphite precursor to the cladding material is 100:(2 to 100), which may be specifically 100:2, 100:10, 100:20, 100:50, 100:80 or 100:100 or the like, or may be any other value within the above range, which is not limited herein.

At step S300, thermal treatment is performed on the negative electrode material obtained in step S200 mixed with the cladding material.

It is to be understood that when the natural graphite precursor is mixed and then compacted with the cladding material in step S200, step S300 may be omitted.

In some implementations, the cladding material includes a carbon material, and preferably, the carbon material includes a carbon material having a softening point of 20°C to 300 °C.

In some implementations, the cladding material includes at least one of a high-molecular polymer, resin, coal pitch, petroleum pitch, mesophase pitch, coal tar or heavy oil.

In some implementations, a mass ratio of the negative electrode material to the cladding material is 100:(2 to 100), which may be specifically 100:2, 100:10, 100:20, 100:50, 100:80 or 100:100 or the like, or may be any other value within the above range, which is not limited herein.

In some implementations, the thermal treatment is performed at a temperature of 800°C to 3000°C, which may be specifically 800°C, 1000°C, 1200°C, 1500°C, 1800°C, 2000°C, 2500°C, 2800°C, or 3000°C, or the like, or may be any other value within the above range, which is not limited herein.

In some implementations, the thermal treatment is performed in a protective gas atmosphere, where the protective gas includes at least one of helium, neon, argon, nitrogen or krypton.

In some implementations, the thermal treatment is performed for 1h to 24h, which may be specifically 1h, 5h, 12h, 15h, 18h, or 24h, or the like, or may be any other value within the above range, which is not limited herein.

In some implementations, after the thermal treatment, the method further includes a step of scattering, screening and demagnetizing the resulting material.

In some implementations, the mesh number of the screening is 100 to 500, which may be specifically 100, 200, 300, 400, or 500, or may be any other value within the above range, which is not limited herein.

In a third aspect, the present application further provides a lithium-ion battery, including the negative electrode material as described above, or including a negative electrode material prepared by the above preparation method.

The present application is further illustrated below by specific embodiments.

### Embodiment 1

(1) Natural flake graphite is crushed and shaped to obtain spherical natural graphite with an average particle size of 17µm, where a sphericity of the spherical natural graphite satisfies Sh(10%)≥0.75, Sh(50%)≥0.83, and Sh(90%)≥0.88.
(2) The spherical natural graphite obtained in step (1) is compacted in a cold isostatic press under a working pressure set to 100MPa at 30°C for 30min, to obtain blocky graphite. Then, the blocky graphite is crushed to obtain compacted natural graphite with a median particle size of 17µm.
(3) The compacted natural graphite obtained in step (2) is subjected to solid-phase mixing with petroleum pitch at a mass ratio of 90:10, then the mixture is carbonized in a kiln with an inert atmosphere at 1000°C, and then the carbonized material is scattered, screened and demagnetized to obtain the negative electrode material.

A sectional SEM image of the negative electrode material prepared according to this embodiment is shown in FIG. 2, in which it can be observed that the natural graphite has elongated pores inside.

### Embodiment 2

(1) Natural flake graphite is crushed and shaped to obtain spherical natural graphite with an average particle size of 17µm, where a sphericity of the spherical natural graphite satisfies Sh(10%)≥0.75, Sh(50%)≥0.83, and Sh(90%)≥0.88.
(2) The spherical natural graphite obtained in step (1) is mixed with petroleum pitch at a ratio of 90:10, and then the mixture is processed by a hot press at 1000°C under a pressure of 25MPa for 30min, so that the material is processed into blocky graphite. Then, the blocky graphite is crushed to obtain a negative electrode material with a median particle size of 17µm.

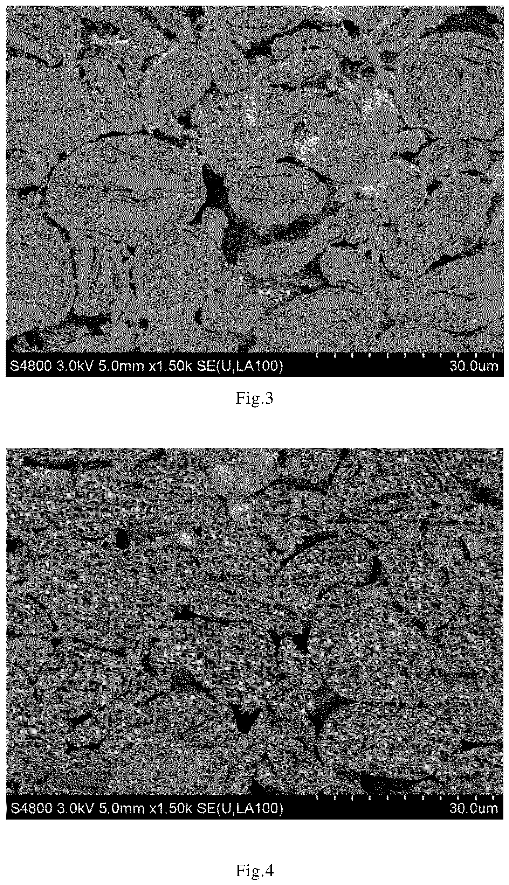

A sectional SEM image of the negative electrode material prepared according to this embodiment is shown in FIG. 3, in which it can be observed that the natural graphite has elongated pores inside and on the surface.

### Embodiment 3

(1) Natural flake graphite is crushed and shaped to obtain spherical natural graphite with an average particle size of 17µm, where a sphericity of the spherical natural graphite satisfies Sh(10%)≥0.75, Sh(50%)≥0.83, and Sh(90%)≥0.88.
(2) The spherical natural graphite obtained in step (1) is mixed with petroleum pitch at a ratio of 80:20, and then the mixture is pre-processed by a heating blender protected by an inert atmosphere at a temperature set to 300°C for 5h. The material is processed into blocky graphite.
(3) The blocky graphite obtained in step (2) is processed by a die press under a pressure of 25MPa for 30min. After the processing, a compacted natural graphite block is obtained. Then the compacted natural graphite block is crushed to obtain a negative electrode material with a median particle size of 17µm.

A sectional SEM image of the negative electrode material prepared according to this embodiment is shown in FIG. 4, in which it can be observed that the natural graphite has elongated pores inside.

### Embodiment 4

(1) Natural flake graphite is crushed and shaped to obtain spherical natural graphite with an average particle size of 5µm, where a sphericity of the spherical natural graphite satisfies Sh(10%)≥0.75, Sh(50%)≥0.83, and Sh(90%)≥0.88.
(2) The spherical natural graphite obtained in step (1) is compacted in a cold isostatic press under a working pressure set to 100MPa at 30°C for 30min, to obtain blocky graphite. Then, the blocky graphite is crushed to obtain compacted natural graphite with a median particle size of 5µm.
(3) The compacted natural graphite obtained in step (2) is subjected to solid-phase mixing with petroleum pitch at a mass ratio of 90:10, then the mixture is carbonized in a kiln with an inert atmosphere at 1000°C, and then the carbonized material is scattered, screened and demagnetized to obtain the negative electrode material.

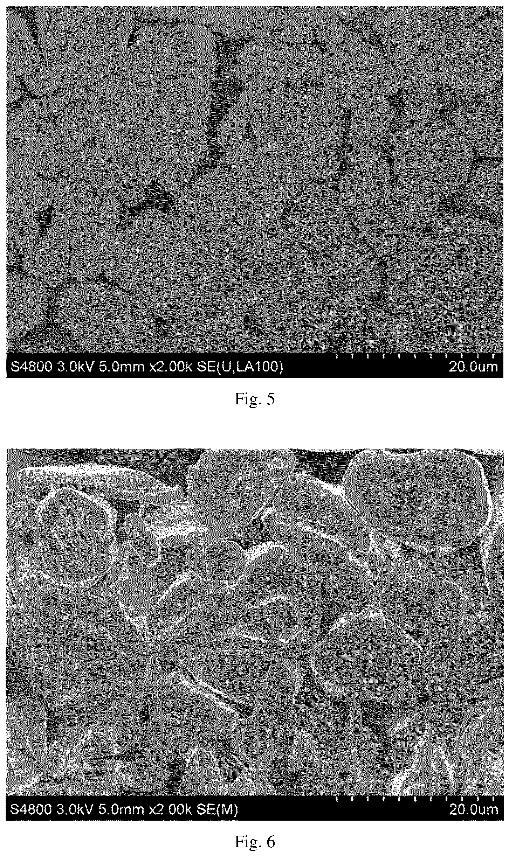

A sectional SEM image of the negative electrode material prepared according to this embodiment is shown in FIG. 5, in which it can be observed that the natural graphite has elongated pores inside and on the surface.

### Embodiment 5

(1) Natural flake graphite is crushed and shaped to obtain spherical natural graphite with an average particle size of 11µm, where a sphericity of the spherical natural graphite satisfies Sh(10%)≥0.75, Sh(50%)≥0.83, and Sh(90%)≥0.88.
(2) The spherical natural graphite obtained in step (1) is compacted in a cold isostatic press under a working pressure set to 100MPa at 30°C for 30min, to obtain blocky graphite. Then, the blocky graphite is crushed to obtain compacted natural graphite with a median particle size of 11µm.
(3) The compacted natural graphite obtained in step (2) is subjected to solid-phase mixing with petroleum pitch at a mass ratio of 90:10, then the mixture is carbonized in a kiln with an inert atmosphere at 1000°C, and then the carbonized material is scattered, screened and demagnetized to obtain the negative electrode material.

### Embodiment 6

(1) Natural flake graphite is crushed and shaped to obtain spherical natural graphite with an average particle size of 25µm, where a sphericity of the spherical natural graphite satisfies Sh(10%)≥0.75, Sh(50%)≥0.83, and Sh(90%)≥0.88.
(2) The spherical natural graphite obtained in step (1) is compacted in a cold isostatic press under a working pressure set to 100MPa at 30°C for 30min, to obtain blocky graphite. Then, the blocky graphite is crushed to obtain compacted natural graphite with a median particle size of 25µm.
(3) The compacted natural graphite obtained in step (2) is subjected to solid-phase mixing with petroleum pitch at a mass ratio of 90:10, then the mixture is carbonized in a kiln with an inert atmosphere at 1000°C, and then the carbonized material is scattered, screened and demagnetized to obtain the negative electrode material.

### Embodiment 7

(1) Natural flake graphite is crushed and shaped to obtain spherical natural graphite with an average particle size of 17µm, where a sphericity of the spherical natural graphite satisfies Sh(10%)≥0.75, Sh(50%)≥0.83, and Sh(90%)≥0.88.
(2) The spherical natural graphite obtained in step (1) is compacted in a cold isostatic press under a working pressure set to 60MPa at 30°C for 30min, to obtain blocky graphite. Then, the blocky graphite is crushed to obtain compacted natural graphite with a median particle size of 17µm.
(3) The compacted natural graphite obtained in step (2) is subjected to solid-phase mixing with petroleum pitch at a mass ratio of 90:10, then the mixture is carbonized in a kiln with an inert atmosphere at 1000°C, and then the carbonized material is scattered, screened and demagnetized to obtain the negative electrode material.

### Embodiment 8

(1) Natural flake graphite is crushed and shaped to obtain spherical natural graphite with an average particle size of 17µm, where a sphericity of the spherical natural graphite satisfies Sh(10%)≥0.75, Sh(50%)≥0.83, and Sh(90%)≥0.88.
(2) The spherical natural graphite obtained in step (1) is compacted in a cold isostatic press under a working pressure set to 200MPa at 30°C for 30min, to obtain blocky graphite. Then, the blocky graphite is crushed to obtain compacted natural graphite with a median particle size of 17µm.
(3) The compacted natural graphite obtained in step (2) is subjected to solid-phase mixing with petroleum pitch at a mass ratio of 90:10, then the mixture is carbonized in a kiln with an inert atmosphere at 1000°C, and then the carbonized material is scattered, screened and demagnetized to obtain the negative electrode material.

### Embodiment 9

(1) Natural flake graphite is crushed and shaped to obtain spherical natural graphite with an average particle size of 17µm, where a sphericity of the spherical natural graphite satisfies Sh(10%)≥0.75, Sh(50%)≥0.83, and Sh(90%)≥0.88.
(2) The spherical natural graphite obtained in step (1) is compacted in a cold isostatic press under a working pressure set to 250MPa at 30°C for 30min, to obtain blocky graphite. Then, the blocky graphite is crushed to obtain compacted natural graphite with a median particle size of 17µm.
(3) The compacted natural graphite obtained in step (2) is subjected to solid-phase mixing with petroleum pitch at a mass ratio of 90:10, then the mixture is carbonized in a kiln with an inert atmosphere at 1000°C, and then the carbonized material is scattered, screened and demagnetized to obtain the negative electrode material.

### Embodiment 10

Unlike embodiment 1, step (3) is not performed in this embodiment.

### Comparative example 1

(1) Natural flake graphite is crushed and shaped to obtain spherical natural graphite with an average particle size of 17µm, where a sphericity of the spherical natural graphite satisfies Sh(10%)≥0.75, Sh(50%)≥0.83, and Sh(90%)≥0.88.
(2) The spherical natural graphite obtained in step (1) is subjected to solid-phase mixing with pitch at a mass ratio 90:10, then the mixture is carbonized in a kiln with an inert atmosphere at 1000°C, and then the carbonized material is scattered, screened and demagnetized to obtain the negative electrode material.

A sectional SEM image of the negative electrode material prepared according to this comparative example is shown in FIG. 6, in which it can be observed that the natural graphite has elongated pores inside and on the surface.

### Comparative example 2

(1) Natural flake graphite is crushed and shaped to obtain spherical natural graphite with an average particle size of 17µm, where a sphericity of the spherical natural graphite satisfies Sh(10%)≥0.75, Sh(50%)≥0.83, and Sh(90%)≥0.88.
(2) The spherical natural graphite obtained in step (1) is compacted in a cold isostatic press under a working pressure set to 50MPa to obtain blocky graphite, and then, the blocky graphite is crushed to obtain compacted natural graphite with a median particle size of 17µm.
(3) The compacted natural graphite obtained in step (2) is subjected to solid-phase mixing with pitch at a mass ratio of 90:10, then the mixture is carbonized in a kiln with an inert atmosphere at 1000°C, and then the carbonized material is scattered, screened and demagnetized to obtain the negative electrode material.

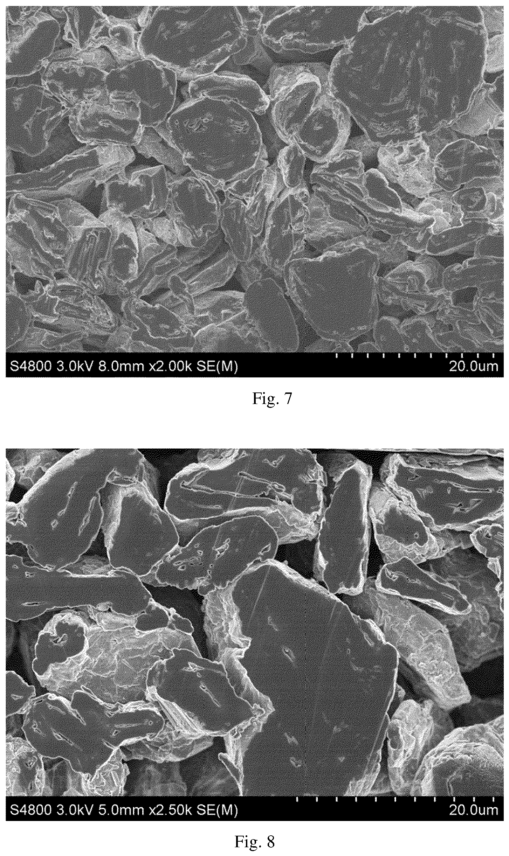

A sectional SEM image of the negative electrode material prepared according to this comparative example is shown in FIG. 7, in which it can be observed that the natural graphite has more pores of irregular shapes.

### Comparative example 3

(1) Natural flake graphite is crushed and shaped to obtain spherical natural graphite with an average particle size of 17µm, where a sphericity of the spherical natural graphite satisfies Sh(10%)=0.72, Sh(50%)=0.79, and Sh(90%)=0.87.
(2) The spherical natural graphite obtained in step (1) is compacted in a cold isostatic press under a working pressure set to 100MPa at 30°C for 30min, to obtain blocky graphite. Then, the blocky graphite is crushed to obtain compacted natural graphite with a median particle size of 17µm.
(3) The compacted natural graphite obtained in step (2) is subjected to solid-phase mixing with petroleum pitch at a mass ratio of 90:10, then the mixture is carbonized in a kiln with an inert atmosphere at 1000°C, and then the carbonized material is scattered, screened and demagnetized to obtain the negative electrode material.

A sectional SEM image of the negative electrode material prepared according to this comparative example is shown in FIG. 8, in which it can be observed that the natural graphite has more pores of irregular shapes.

### Comparative example 4

(1) Natural flake graphite is crushed and shaped to obtain spherical natural graphite with an average particle size of 30µm, where a sphericity of the spherical natural graphite satisfies Sh(10%)≥0.75, Sh(50%)≥0.83, and Sh(90%)≥0.88.
(2) The spherical natural graphite obtained in step (1) is compacted in a cold isostatic press under a working pressure set to 100MPa at 30°C for 30min, to obtain blocky graphite. Then, the blocky graphite is crushed to obtain compacted natural graphite with a median particle size of 30µm.
(3) The compacted natural graphite obtained in step (2) is subjected to solid-phase mixing with petroleum pitch at a mass ratio of 90:10, then the mixture is carbonized in a kiln with an inert atmosphere at 1000°C, and then the carbonized material is scattered, screened and demagnetized to obtain the negative electrode material.

### Performance test

(1) A Malvern laser particle size analyzer MS 2000 is used to test the median particle diameter D50 of the negative electrode material.
(2) A QICPIC dynamic particle image analyzer from SYMPATEC is used to test the sphericities Sh(10%), Sh(50%) and Sh(90%) of the material.
(3) A Tristar device from Micromeritics is used to test the specific surface area of the negative electrode material.
(4) A mercury porosimeter AutoPore IV 9500 is used to test a volume of pores with an aperture within 3nm to 1000nm in the material.
(5) The testing device and system disclosed in patent CN201920973729.5 are used to test a pole piece expansion rate after 20 periods of cycle.
(6) Particle samples are milled by an ion mill (HITACHI E3500) to make sections of the particles visible, and then placed and observed under a high power electron microscope (HITACHI S4800) to obtain internal information of the particles. Widths of pores within a selected region are measured by a ruler and counted, where the total number of randomly observed pores is 100, and the numbers and ratios of pores with sizes smaller than 0.1µm, from 0.1 to 0.5µm, and greater than 0.5µm are respectively counted and calculated. The three types of pores are defined as small pores, medium pores and large pores, respectively, and the numbers and ratios of the three types of pores are respectively counted and calculated. The slenderness ratio of a pore refers to a ratio of length to width of the pore within a selected region measured by a ruler when the particles are placed and observed under a high power electron microscope (HITACHI S4800) to obtain internal information of the particles.
(7) The negative electrode material is mixed with a conductive agent and a binder at a mass ratio of 94:1:5 by dissolving in a solvent, where the solid content is controlled to be 50%. Then the mixture is coated onto a copper foil current collector, and dried in vacuum to obtain a negative pole piece. Then, a ternary positive pole piece prepared by a traditional mature process, 1mol/L of LiPF6/EC+DMC+EMC (v/v=1:1:1) electrolyte, a Celgard2400 diaphragm and a shell are assembled into an 18650 cylindrical single-cell battery by a conventional production process. The charging and discharging test of the cylindrical battery is performed on a LAND battery test system from Wuhan Jinnuo electronics under room temperature conditions at a constant current of 0.2C with a charging and discharging voltage limited to 2.75 to 4.2V. In this manner, a first reversible capacity, a first-circle charge capacity and a first-circle discharge capacity are obtained, where first coulombic efficiency = first-cycle discharge capacity/first-cycle charge capacity.

The cycle is repeated for 50 periods, and each discharge capacity is recorded as a surplus capacity of the lithium-ion battery, where capacity retention = surplus capacity/initial capacity * 100%.

Measurement of pole piece expansion rate after 20 periods (%): the negative electrode material is mixed with a conductive agent and a binder at a mass ratio of 94:1:5 by dissolving in a solvent, where the solid content is controlled to be 50%. Then the mixture is coated onto a copper foil current collector, and dried in vacuum to obtain a negative pole piece. A load capacity of negative electrode material on the control pole piece is 7.0 mg/cm², a compaction density of the rolled pole piece is 1.60 g/cm³ and a thickness d1 of the pole piece is tested. Then the pole piece is assembled into a button cell for testing, and after 20 periods of cycle, the cell is disassembled and a thickness d2 of the pole piece is tested again, where pole piece expansion rate = (d2-d1)/d1*100%.

The test results are shown in tables 1 and 2.

**Table 1. Parameter test results of negative electrode materials in various embodiments and comparative examples**

| Index | D 50 (µ m ) | Spe cific surf ace area (m2 /g) | Tap dens ity (g/c m3) | Sphericity | | | Pore volume (mL/g) | Proport ion of pores with an apertur e of 0.1 to 0.5µm | Maxi mum apertu re (µm) | Topograph y features of more than 60% of the pores (SEM) |
|---|---|---|---|---|---|---|---|---|---|---|
| | | | | Sh(10 %) | Sh(5 0%) | Sh(9 0%) | | | | |
| Embodi ment 1 | 17 | 2.48 | 1.04 | 0.76 | 0.84 | 0.90 | 0.08 | 85% | 2.1 | Elongated |
| Embodi ment 2 | 17 | 3.20 | 0.98 | 0.78 | 0.86 | 0.91 | 0.10 | 65% | 2.1 | Elongated |
| Embodi ment 3 | 17 | 3.40 | 0.96 | 0.77 | 0.85 | 0.90 | 0.09 | 75% | 2.4 | Elongated |
| Embodi ment 4 | 5 | 3.40 | 0.91 | 0.76 | 0.85 | 0.89 | 0.06 | 85% | 1.4 | Elongated |
| Embodi ment 5 | 10 | 2.62 | 1.09 | 0.81 | 0.88 | 0.94 | 0.06 | 90% | 1.7 | Elongated |
| Embodi ment 6 | 25 | 1.80 | 1.15 | 0.78 | 0.86 | 0.92 | 0.10 | 70% | 2.5 | Elongated |
| Embodi ment 7 | 17 | 2.40 | 1.02 | 0.78 | 0.86 | 0.92 | 0.06 | 75% | 2.4 | Elongated |
| Embodi ment 8 | 17 | 2.72 | 0.99 | 0.76 | 0.84 | 0.89 | 0.06 | 90% | 1.9 | Elongated |
| Embodi ment 9 | 17 | 2.82 | 0.96 | 0.75 | 0.83 | 0.88 | 0.05 | 75% | 1.8 | Elongated |
| Embodi ment 10 | 17 | 4.65 | 0.93 | 0.75 | 0.83 | 0.88 | 0.06 | 73% | 2.1 | Elongated |
| Compara tive example 1 | 17 | 2.70 | 1.00 | 0.76 | 0.84 | 0.90 | 0.15 | 50% | 3.5 | Elongated |
| Compara tive example 2 | 17 | 2.91 | 0.96 | 0.76 | 0.84 | 0.90 | 0.12 | 65% | 1.6 | Irregular |
| Compara tive example 3 | 17 | 2.56 | 1.03 | 0.72 | 0.79 | 0.87 | 0.09 | 85% | 1.4 | Irregular |
| Compara tive example 4 | 30 | 1.52 | 1.14 | 0.75 | 0.83 | 0.90 | 0.11 | 60% | 4.1 | Elongated |

It is to be understood that the topography of the pores described as "irregular" in comparative examples 2 and 3 means that the pores in the natural graphite are not elongated, that is, a topography of pores not linearly arranged, and/or pores having a slenderness ratio less than or equal to 3.

**Table 2. Performance test data of various embodiments and comparative examples**

| Index | Capacity (mAh/g) | First efficiency (%) | Pole piece expansion rate after 20 periods (%) | Capacity retention after 50 periods (%) |
|---|---|---|---|---|
| Embodiment 1 | 363.8 | 94.4 | 22.1 | 90.5 |
| Embodiment 2 | 359.8 | 94.0 | 24.1 | 90.3 |
| Embodiment 3 | 355.6 | 94.2 | 23.5 | 90.1 |
| Embodiment 4 | 363.5 | 92.5 | 22.0 | 90.2 |
| Embodiment 5 | 359.3 | 93.8 | 21.7 | 90.4 |
| Embodiment 6 | 364.8 | 94.9 | 23.8 | 91.1 |
| Embodiment 7 | 364.2 | 94.7 | 24.0 | 90.1 |
| Embodiment 8 | 363.6 | 94.1 | 21.5 | 90.7 |
| Embodiment 9 | 363.5 | 94.0 | 21.3 | 90.8 |
| Embodiment 10 | 363.2 | 93.4 | 21.9 | 90.0 |
| Comparative example 1 | 362.2 | 94.6 | 27.1 | 89.0 |
| Comparative example 2 | 354.6 | 93.2 | 26.5 | 89.2 |
| Comparative example 3 | 362.5 | 94.3 | 25.4 | 89.3 |
| Comparative example 4 | 364.9 | 95.1 | 26.4 | 89.5 |

As shown in tables 1 and 2, the negative electrode material prepared in any one of embodiments 1 to 10 of the present application includes carbonaceous particles with pores, where the pores in the carbonaceous particles are elongated structures, which indicates that the materials inside the carbonaceous particles are orderly arranged and flake graphite layers inside the particles are in close contact, thereby helping to improve the capacity performance of the negative electrode material. The present application further defines that the number of pores with an aperture of 0.1 µm to 0.5µm takes a proportion greater than or equal to 60% of the total number of pores, which indicates that in the present application, the porous carbonaceous particles have fine pores as well as a low porosity, and therefore, the carbonaceous particles have a compacted structure, so that the negative electrode material generates lower expansion in the charging and discharging process. The negative electrode material of the present application has elongated pores, and most of the pores have a relatively small aperture, which indicates that in the present application, the carbonaceous particles have a relatively small pore volume inside, and less large pores are provided, so that the carbonaceous particles have excellent compactness, and the capacity, expansion and cycle performances of the negative electrode material are improved.

The negative electrode material prepared in comparative example 1 is not compacted, resulting in a larger pore volume and a higher porosity, as well as deteriorated expansion and cycle performances, of the negative electrode material prepared in comparative example 1.

The working pressure of the cold isostatic press in comparative example 2 is beyond the range defined in the present application, resulting in irregular pores and a higher pore volume in the negative electrode material prepared in comparative example 2, which has lower capacity and first efficiency than that prepared in embodiment 1.

The sphericity of the graphite raw material in comparative example 3 is beyond the range defined in the present application, so that the prepared negative electrode material has poor sphericity and therefore higher expansion, and the expansion performance of the material is still poor despite the elongated small pores inside.

The particle size of the graphite raw material in comparative example 4 is beyond the range defined by the present application, so that the compacting effect of the prepared negative electrode material is poor, and a small number of large pores are still present despite a considerable number of elongated small pores inside the material, resulting in higher expansion and poor cycle performance of the finally prepared negative electrode material.

The descriptions above are merely preferred embodiments of the present application, which are not used to limit the present application. For those skilled in the art, the present application may have various changes and variations. Any amendments, equivalent substitutions, improvements, and the like within the spirit and principle of the present application are included in the scope of protection defined by the appended claims of the present application.

## Claims

1. A negative electrode material, **characterized in that** the negative electrode material comprises carbonaceous particles with pores, and by observing an SEM image, at least some of the pores have a slenderness ratio greater than 3, the total number of randomly observed pores is 100, and the number of pores with an aperture of 0.1µm to 0.5µm takes a proportion greater than or equal to 60% of the total number of pores.

2. The negative electrode material of claim 1, **characterized in that** a maximum aperture of the pores is less than or equal to 3µm.

3. The negative electrode material of claim 1, **characterized in that** the negative electrode material comprises at least one of the following features (1) to (3):
(1) the carbonaceous particles include graphite;
(2) the carbonaceous particles include natural graphite including at least one of flake graphite or microcrystalline graphite; or
(3) a median particle size of the carbonaceous particles is 5µm to 25µm.

4. The negative electrode material of claim 1, **characterized in that** the negative electrode material further comprises a cladding layer covering at least partially a surface of the carbonaceous particles, wherein the negative electrode material includes at least one of the following features (1) to (2):
(1) the cladding layer is made of a carbon material; or
(2) the cladding layer is made of a carbon material including at least one of soft carbon, crystalline carbon, amorphous carbon or hard carbon.

5. The negative electrode material of claim 1, **characterized in that** the negative electrode material comprises at least one of the following features (1) to (6):
(1) a median particle size D50 of the negative electrode material satisfies: 5µm<D50<25µm;
(2) the negative electrode material has a sphericity Sh(10%)≥0.75;
(3) the negative electrode material has a sphericity Sh(50%)≥0.83;
(4) the negative electrode material has a sphericity Sh(90%)≥0.88;
(5) the negative electrode material has a pore volume of 0.05 mL/g to 0.11 mL/g; or
(6) the negative electrode material has a specific surface area of 0.5 m²/g to 3.5 m²/g.

6. A preparation method for a negative electrode material, **characterized in** comprising:
providing a natural graphite precursor, wherein the natural graphite precursor has a median particle size of 5µm to 25µm, a sphericity Sh(10%)≥0.75, a sphericity Sh(50%)≥0.83, and a sphericity Sh(90%)≥0.88; and
compacting the natural graphite precursor so that the resulting negative electrode material includes carbonaceous particles with pores, at least some of the pores have a slenderness ratio greater than 3, the total number of randomly observed pores is 100, and the number of pores with an aperture of 0.1µm to 0.5µm takes a proportion greater than or equal to 60% of the total number of pores.

7. The preparation method of claim 6, **characterized in that** the preparation method comprises at least one of the following features (1) to (2):
(1) the natural graphite precursor is prepared by: shaping natural graphite; or
(2) the natural graphite precursor is prepared by: shaping natural graphite including at least one of flake graphite or microcrystalline graphite.

8. The preparation method of claim 6, **characterized in that** the preparation method comprises at least one of the following features (1) to (4):
(1) the compacting includes at least one of cold isostatic pressing, hot isostatic pressing, mold pressing or hot press molding;
(2) the compacting is performed at a pressure of 20MPa to 200MPa;
(3) the compacting is performed for 1min to 200min; or
(4) the compacting is performed at a temperature of 25°C to 1500°C.

9. The preparation method of claim 6, **characterized in that** before compacting the natural graphite precursor, the method further includes: a step of mixing a cladding material with the natural graphite precursor, and then compacting the mixture, wherein the cladding material includes at least one of a high-molecular polymer, resin, coal pitch, petroleum pitch, mesophase pitch, coal tar and heavy oil.

10. The preparation method of claim 6, **characterized in that** after obtaining the negative electrode material, the method further comprises: a step of performing thermal treatment on the negative electrode material mixed with the cladding material, wherein the preparation method includes at least one of the following features (1) to (5):
(1) the cladding material includes at least one of a high-molecular polymer, resin, coal pitch, petroleum pitch, mesophase pitch, coal tar and heavy oil;
(2) a mass ratio of the negative electrode material to the cladding material is 100:(2 to 100);
(3) the thermal treatment is performed at a temperature of 800°C to 3000°C;
(4) the thermal treatment is performed in a protective gas atmosphere, wherein the protective gas includes at least one of helium, neon, argon, nitrogen and krypton; or
(5) the thermal treatment is performed for 1h to 24h.

11. A lithium-ion battery, **characterized in that** the lithium-ion battery comprises the negative electrode material of any one of claims 1 to 5, or a negative electrode material prepared by the preparation method of any one of claims 6 to 10.
